# EUROPÄISCHE PATENTSCHRIFT

(11) **EP 3 969 222 B1**
(45) Veröffentlichungstag und Bekanntmachung des Hinweises auf die Patenterteilung: **05.07.2023**
(21) Anmeldenummer: 20726715.4
(22) Anmeldetag: 06.05.2020
(51) Int. Cl.: B23P 19/04, B60J 10/00

(54) **APPLIKATIONSEINHEIT MIT ANDRÜCKKRAFTMESSUNG**
APPLICATION UNIT WITH PRESSING FORCE MEASUREMENT
UNITÉ D'APPLICATION À MESURE DE LA FORCE DE PRESSION

(30) Priorität: 16.05.2019 DE 102019207127
(43) Veröffentlichungstag der Anmeldung: 23.03.2022
(73) Patentinhaber: thyssenkrupp Automotive Body Solutions GmbH, 74076 Heilbronn (DE); thyssenkrupp AG, 45143 Essen (DE)
(72) Erfinder: LÖSCH, Alfred, 66636 Tholey (DE)
(74) Vertreter: thyssenkrupp Intellectual Property GmbH
(86) Internationale Anmeldenummer: PCT/EP2020/062622
(87) Internationale Veröffentlichungsnummer: WO 2020/229272

(56) Entgegenhaltungen:
- EP-A1- 1 820 720
- EP-A1- 1 950 125
- EP-A1- 1 953 073
- DE-A1-102016 213 297
- DE-U1-202010 005 315
- JP-A- 2008 012 952

## Beschreibung

Die Erfindung betrifft eine Applikationseinheit zum Anbringen eines Dichtungsprofils auf ein dem Verschließen einer Karosserieöffnung dienenden Karosseriebauteil, mit einem Anrollkopf und einer an dem Anrollkopf gehaltene und drehend um eine Drehachse D antreibbare Andrückrolle, um über die Andrückrolle das Dichtungsprofil mit einer Andrückkraft F_{A} in einer Andrückrichtung R_{A} gegen das Karosseriebauteil zu beaufschlagen.

Derartige Dichtungsprofile sind beispielsweise dafür vorgesehen, eine dichtende Verbindung zwischen einer Karosserieöffnung und dem in ihr eingesetzten Karosserieteil herzustellen. Bei einem Karosserieteil kann es sich beispielsweise um eine Tür, einen Kofferraumdeckel oder ein Schiebedachelement handeln. Im Folgenden soll exemplarisch auf eine Fahrzeugtür eingegangen werden, die in dem Stadium, in dem das Dichtungsprofil auf ihr angebracht wird, auch als Türzusammenbau bezeichnet werden kann.

Im Stand der Technik ist ein als "direktes Anrollen" bezeichnetes Verfahren zum Anbringen eines Dichtungsprofils auf einen Türzusammenbau bekannt. Hierbei wird das Dichtungsprofil von einer Endlosrolle mittels einer Applikationseinheit - auch Applikationskopf genannt - auf den Türzusammenbau aufgebracht. Die Applikationseinheit weist eine Schnittstelle zur Anbindung an einen Handhabungsroboter auf und beinhaltet eine Förder- und Puffereinrichtung, über die das Dichtungsprofil von der Endlosrolle gefördert wird. Hierbei ist bei einer möglichen Verfahrensvariante der Türzusammenbau an sich in einer bewegbaren Halterungsvorrichtung, beispielsweise über einen Industrieroboter bewegbar, aufgenommen und wird an dem ortsfesten Applikationskopf, und damit an der Andrückrolle, vorbeigeführt, der dabei das Dichtungsprofil auf dem Türzusammenbau appliziert. Problematisch hierbei ist, dass der Türzusammenbau aus dem Gehänge bzw. der Bauteilzuführung einer Transportvorrichtung entnommen, an ein Handhabungsgerät übergeben und über das Handhabungsgerät zur Applikationseinheit geführt werden muss. Dies ist mit einem hohen apparativen und logistischen Aufwand verbunden.

In einer weiteren möglichen Verfahrensvariante wird ein mobiler Applikationskopf, welcher beispielsweise über ein Handhabungsgerät geführt wird, an dem stationären Türzusammenbau umlaufend entlanggeführt. Bei beiden Verfahrensvarianten durchtrennt ein Schnittmesser das Dichtungsprofil, sobald das Dichtungsprofil rings um den Türzusammenbau appliziert wurde, um es von der Endlosrolle abzulängen.

Für beide soeben beschriebenen Verfahrensvarianten gilt, dass nach dem umfänglichen Anbringen des Dichtungsprofils beide Dichtungsenden, das heißt der bereits zu Beginn applizierte Anfang und das soeben durch das Ablängen entstandene Ende, derart einander angenähert werden, dass in dem Stoßbereich ein möglichst durchgängiges Dichtungsprofil entsteht, wobei der Stoßbereich durch das Aufeinandertreffen der beiden Dichtungsendflächen entsteht und das Aufeinandertreffen je nach angewendetem Verfahren praktisch spaltfrei oder mit einem geringem Spalt zwischen den Dichtungsenden erfolgen kann.

Während der Applikation des Dichtungsprofils ist zu gewährleisten, dass das Dichtungsprofil umlaufend mit einer gleichbleibenden Andrückkraft F_{A} auf den Türzusammenbau angedrückt wird. Die Andrückkraft liegt regelmäßig in einen Bereich von 30N bis 100N, wodurch eine korrekte Verklebung des Dichtungsprofils mit der Oberfläche des Türzusammenbaus sichergestellt ist. Bisher wird die tatsächliche Andrückkraft während der Applikation bzw. während des Anrollen des Dichtungsprofils nicht gemessen bzw. nicht überwacht. Konsequenterweise kann ein Ist-Wert der Andrückkraft auch nicht geregelt werden, da eine Ist-Werterfassung nicht erfolgt. Aus Sicht des Betreibers wäre sowohl eine Ist-Werterfassung der Andrückkraft wünschenswert, womit dann auch ohne nennenswerten Mehraufwand eine Datenspeicherung zu ermöglichen wäre, da es für ihn in einem späteren Schadensfall im Bereich des Dichtungsprofils, beispielsweise ein Ablösen der Verklebung, wichtig wäre zu wissen, ob eine zu geringe Andrückkraft während des Applizierens hierfür ursächlich sein könnte.

Bei dem mobilen Applikationskopf gestaltet sich die Messung der Andrückkraft infolge der sich fortlaufend ändernden Gewichtskraft des Applikationskopfes während des Umlaufs um das Karosseriebauteil schwierig. Während des gesamten Umlaufs wirkt die Gewichtskraft des Applikationskopfes der Andrückkraft sinusförmig entgegen oder verstärkt sie. Um eine möglichst verlässliche Messung der Andrückkraft zu ermöglichen, muss der Ort der Messung möglichst nahe an der Andrückrolle erfolgen. Der Anrollkopf ist in der Regel mittels eines doppeltwirkenden Pneumatikzylinders federnd und entlang eines linearen Freiheitsgrades beweglich gelagert. Hierbei ist die Bahn des Handhabungsroboters des Applikationskopfes derart programmiert, dass die Andrückkraft in Normalenrichtung auf den Klebeflansch des Karosseriebauteils wirkt. Abweichungen von der Normalenrichtung kann die Andrückkraft erfahren, wenn dies zur Vermeidung einer Kollision zwischen dem Karosseriebauteil und dem Anrollkopf erforderlich ist. In diesem Fall ist die resultierende Andrückkraft geringer als ein vorgegebener Sollwert, es kann aber mangels Ist-Werterfassung keine Aussage getroffen werden, um wieviel der vorgegebene Sollwert unterschritten wird.

Als Stand der Technik kann auf die Beschreibung der DE 10 2016 213 297 A1, EP 1 950 125 B1 und der EP 1 953 073 A1 verwiesen werden. Die DE 10 2016 213 297 A1 offenbart die Merkmale des Oberbegriffs des Anspruchs 1.

Ausgehend hiervon besteht die Aufgabe der vorliegenden Erfindung darin, eine Applikationseinheit bereitzustellen, mit der eine Ist-Werterfassung der Andrückkraft möglich ist.

Die Aufgabe wird gelöst durch eine Applikationseinheit zum Anbringen eines Dichtungsprofils auf ein dem Verschließen einer Karosserieöffnung dienenden Karosseriebauteil, mit einem Anrollkopf und einer an dem Anrollkopf gehaltene und drehend um eine Drehachse D antreibbare Andrückrolle, um über die Andrückrolle das Dichtungsprofil mit einer Andrückkraft F_{A} in einer Andrückrichtung R_{A} gegen das Karosseriebauteil zu beaufschlagen, wobei in einem Anbindungsbereich der Andrückrolle an den Anrollkopf eine Sensoreinheit umfänglich und konzentrisch um die Drehachse der Andrückrolle angeordnet ist, um eine die Andrückkraft repräsentierende Beanspruchung in dem Anbindungsbereich zu detektieren.

Vorteilhafte Ausführungsbeispiele sind in den abhängigen Ansprüchen angegeben.

Bei der Beanspruchung in dem Anbindungsbereich handelt es sich um Reaktionskräfte infolge der Andrückkraft, die über die Andrückrolle auf das Dichtungsprofil aufgebracht wird. Hierbei ist die Andrückrichtung R_{A} unabhängig von der Rotation, welche die Andrückrolle während der Applikation des Dichtungsprofils fortlaufend unterliegt. Allerdings wandert die Andrückrichtung R_{A} während des vollständigen Umlaufs der Applikationseinheit um das Karosseriebauteil - im Fall der mobilen Applikationseinheit - oder des vollständigen Umlaufs des Karosseriebauteils um die Applikationseinheit - im Fall der stationären Applikationseinheit - einmal vollständig um 360° um Drehachse D der Andrückrolle. Die Sensoreinheit kann derart ausgestaltet sein, dass sie entweder Kräfte oder Biegemomente oder eine Kombination hiervon erfassen kann. In vorteilhafter Weise kann mit einer erfindungsgemäßen Applikationseinheit sowohl ein Ist-Wert der in Normalenrichtung wirkenden Andrückkraft gemessen werden als auch eine gegebenenfalls bestehende Winkelabweichung einer nicht in Normalenrichtung wirksamen resultierenden Andrückkraft.

Erfindungsgemäß ist die Sensoreinheit umfänglich und konzentrisch um die Drehachse D der Andrückrolle angeordnet.

Dies schafft die Voraussetzung dafür, dass eine Erfassung der Andrückkräfte über den vollständigen Umlauf während des Applikationsvorgangs möglich ist.

Eine vorteilhafte Ausgestaltung der Erfindung sieht vor, dass die Andrückrolle in einem Antriebswellengehäuse gehalten ist und das Antriebswellengehäuse in dem Anbindungsbereich an dem Anrollkopf gehalten ist. Über das Antriebswellengehäuse kann die Andrückkraft weitestgehend unverfälscht als Reaktionskraft auf den Anbindungsbereich übertragen werden, ohne die Rotation der Andruckrolle zu behindern. Auch kann das Antriebswellengehäuse bezüglich seiner Abmessungen sehr kompakt gestaltet sein, so dass der Ort der Krafteinleitung der Andrückkraft nah an den Anbindungsbereich, in dem die Reaktionskraft erfasst wird, gelegt werden kann. Eine vorteilhafte Ausgestaltung der Erfindung sieht vor, dass der Anbindungsbereich als Flanschpaarung zwischen dem Antriebswellengehäuse und dem Anrollkopf ausgeführt ist. Durch die Ausgestaltung als Flansch bzw. als Flanschpaarung kann die Anbindung ausreichend stabil und bedarfsweise lösbar ausgelegt werden. In konkreter Ausgestaltung kann vorgesehen sein, dass die Sensoreinheit innerhalb der Flanschpaarung angeordnet ist. Hierdurch bietet sich die Möglichkeit, innerhalb der Trennstelle der Flanschpaarung die dort abgestützten und übertragenen Reaktionskräfte zu erfassen. Weiterhin bietet diese Anordnung einen Schutz für die Sensoreinheit.

Eine vorteilhafte Ausgestaltung der Erfindung sieht vor, dass die Flanschpaarung als Schraubflansch ausgeführt ist. Ein Schraubflansch ist bedarfsweise lösbar ausgeführt. In konkreter Ausgestaltung kann vorgesehen sein, dass der Schraubflansch eine Mehrzahl an umfänglich um die Drehachse D angeordnete Verschraubungen umfasst. Hierbei besteht eine Verschraubung zweckmäßigerweise aus einer Schraube-Mutter-Paarung. Über eine Verschraubung der Flanschpaarung bietet sich messtechnisch die Sensoreinheit auf die in der jeweiligen Verschraubung während der Montage eingestellte und konstruktiv vorgegebene Vorspannung zu kalibrieren, so dass eine Reaktionskraft als eine Erhöhung oder als eine Reduzierung der Vorspannung der jeweiligen Verschraubung erfasst werden kann. Weiterhin kann in konkreter Ausgestaltung vorgesehen sein, dass jeder Verschraubung des Schraubflansches ein Drucksensor der Sensoreinheit zugeordnet ist. Weiterhin ist es zweckmäßig, wenn über den Umfang des Schraubflansches vier Verschraubungen in Form von Schraube-Mutter-Paarungen vorgesehen sind.

Die Erfindung wird nachfolgend mit weiteren Merkmalen, Einzelheiten und Vorteilen anhand der beigefügten Figuren erläutert. Die Figuren illustrieren dabei lediglich beispielhafte Ausführungsformen der Erfindung. Hierin zeigen
- Figur 1: eine prinzipielle Darstellung einer Applikationsvorrichtung;
- Figur 2: eine erfindungsgemäße Applikationsvorrichtung mit einer Darstellung der Kräfte und Momente;
- Figur 3: eine weitere Darstellung der Applikationsvorrichtung gemäß Figur 2;
- Figur 4: eine Darstellung der Applikationsvorrichtung in einer weiteren Ausgestaltung und
- Figur 5: erfasste Reaktionskräfte aufgetragen über dem Winkel α der Andrückkraft.

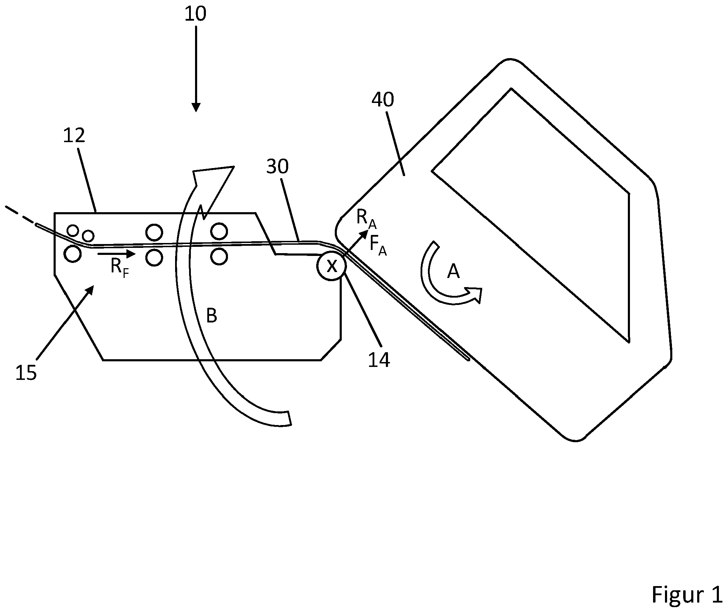

Die Figur 1 zeigt schematisch und nicht maßstabsgetreu eine Applikationsvorrichtung oder -einheit 10 zum Aufbringen eines Dichtungsprofils 30. Dargestellt ist eine Seitenansicht der Vorrichtung 10. Das Dichtungsprofil 30 ist auf einem ausschnittsweise dargestellten Karosseriebauteil 40 in Form eines Türzusammenbaus aufgebracht beziehungsweise wird mittels der Vorrichtung 10 auf diesem Türzusammenbau 40 appliziert. Das Dichtungsprofil 30 ist beispielsweise über ein als selbstklebendes Klebetape ausgebildetes Verbindungsmittel - hier nicht näher dargestellt - an dem Türzusammenbau 40 angebracht. Die Vorrichtung 10 umfasst einen Anrollkopf 12 mit vorliegend einer Andrückrolle 14 und einer Fördereinrichtung 15, die das Dichtungsprofil 30 beispielsweise von einer Endlosrolle abwickelt und in Richtung der Andrückrolle 14 fördert, um von dieser auf den Türzusammenbau 40 appliziert zu werden. Die Förderrichtung des Dichtungsprofils 30 ist mit dem Pfeil R_{F} symbolisiert. Bei einer ersten möglichen Applikationsvariante ist der Anrollkopf 12 weitestgehend ortsfest angeordnet, während sich der Türzusammenbau 40 über ein Handhabungsgerät an der von dem Anrollkopf 12 zugeführten Dichtungsprofil 30 entlanggeführt wird, wobei der Türzusammenbau 40 überwiegend einer Drehung unterworfen wird, wie durch den gebogenen Pfeil A symbolisiert. Bei einer zweiten möglichen Verfahrensvariante ist ein mobiler Anrollkopf 12 vorgesehen, der in diesem Fall über ein Handhabungsgerät um den Türzusammenbau 40 herumbewegt wird, um an dem ortsfest gehaltenen Türzusammenbau 40 das Dichtungsprofil zu applizieren, wie durch den gebogenen Pfeil B symbolisiert.

Bei beiden Verfahrensvarianten werden der Türzusammenbau 40 und der Anrollkopf 12 fortlaufen aneinander entlanggeführt und gegeneinander beaufschlagt, so dass eine definierte und einstellbare Kraft auf die Andrückrolle 14 ausgeübt wird. Als Reaktionskraft ergibt sich folglich eine Andrückkraft F_{A} von der Andrückrolle 14 über das Dichtungsprofil 30 auf den Türzusammenbau 40. Die Andrückkraft F_{A} ist durch einen Pfeil symbolisiert, der seinen Ausgangspunkt in dem Kontaktpunkt zwischen Andrückrolle 14 und Dichtungsprofil 30 hat. Die Richtung der Andrücckraft F_{A} ist mit dem gleichen Pfeil symbolisiert und ist als Andrückrichtung R_{A} bezeichnet. Wie bereits zuvor beschrieben, ist die Andrückrichtung R_{A} idealerweise immer in Normalenrichtung bezogen auf den Klebeflansch des Türzusammenbau 40 gerichtet. Unter realen Bedingungen während der Applikation kann sich allerdings eine von der Normalenrichtung abweichende Andrückrichtung R_{A} einstellen, so dass Normalenrichtung und Andrückrichtung R_{A} unter einem Winkel α zueinander stehen. Ein Winkel α kann sich beispielsweise dann einstellen, wenn das Dichtungsprofil 30 auf einem gebogenen bzw. gewölbten Abschnitt des Klebeflansches appliziert wird. Weiterhin muss ein Winkel α auch dann gegebenenfalls in Kauf genommen werden, wenn der Anrollkopf 12 zur Kollisionsvermeidung mit dem Türzusammenbau 40 einer vorgegebenen Bewegungsbahn folgen muss. In dem Fall eines Winkels α zwischen der Normalenrichtung und der Andrückrichtung R_{A} ist die resultierende Andrückkraft F_{A} um den Kosinus des Winkels α reduziert.

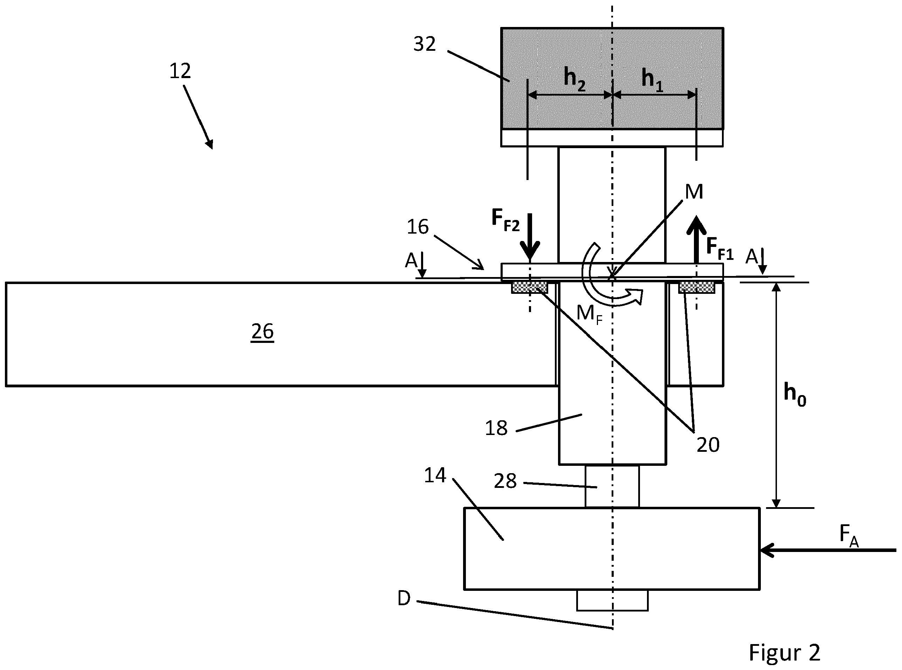

Die Figur 2 zeigt den Anrollkopf 12 ebenfalls in einer schematischen Darstellung und in einer Draufsicht. Bei dem dargestellten Anrollkopf 12 als Teile der Applikationseinheit 10 handelt es sich um eine mögliche erfindungsgemäße Ausgestaltung, anhand der nachfolgend die Erfassung der tatsächlich wirksamen Andrückkraft F_{A} exemplarisch erläutert wird. Zu erkennen ist zunächst ein Grundkörper 26, der als Halteelement für die einzelnen Baugruppen des Anrollkopfes 12 dient. Die Andrückrolle 14 ist drehbar um eine Drehachse D über ein Antriebswellengehäuse 18 an dem Grundkörper 26 gehalten, wobei in dem Antriebswellengehäuse 18 eine Antriebswelle 28 drehbar gehalten ist, die einerseits mit einem Antriebsmotor 32 und andererseits mit der Andrückrolle 14 verbunden ist. Der Antriebsmotor 32 ist gegenüber dem Antriebswellengehäuse 18 abgestützt und treibt die Andrückrolle 14 über die Antriebswelle 28 an.

Das Antriebswellengehäuse 18 ist durch den Grundkörper 26 hindurchgeführt in einem Anbindungsbereich 16 an diesem festgelegt. Zweckmäßigerweise ist der Anbindungsbereich 16 als Flanschpaarung zwischen dem Antriebswellengehäuse 18 und dem Anrollkopf 12 ausgeführt. Hierbei ist zweckmäßigerweise vorgesehen, dass eine Sensoreinheit 20 innerhalb der Flanschpaarung angeordnet ist. Dies bedeutet, dass die Sensoreinheit 20 zwischen den beiden Flanschen, die die Flanschpaarung 16 bilden, angeordnet ist.

Anhand der Figur 2 können auch die Kräfteverhältnisse erläutert werden, die sich während des Applikationsprozesses infolge der Andrückkraft F_{A} der Andrückrolle 14 in dem Anbindungsbereich 16 einstellen und von der Sensoreinheit als Reaktionskräfte F_{F1} und F_{F2}, welche vorliegend die Andrückkraft F_{A} repräsentieren, erfasst wird. Die radial auf die Andrückrolle 14 wirksame Andrücckraft F_{A} wird über den Hebelarm h₀ als Flanschmoment M_{F} in dem Punkt M auf der Drehachse D wirksam. Dieses Flanschmoment M_{F} wird wiederum über die entgegengesetzt zueinander gerichteten Hebelarme h₁ und h₂ als Flanschkräfte F_{F1} und F_{F2} in der Flanschpaarung 16 wirksam. Wesentlich ist hierbei, dass das Flanschmoment M_{F} über den Hebelarm h₁ als Zugkraft F_{F1} der Flanschpaarung 16 und über den Hebelarm h₂ als Druckkraft F_{F2} in der Flanschpaarung 16 als jeweilige Reaktionskraft wirksam wird. Über die Zugkraft wird die Flanschpaarung 16 folglich auseinandergezogen und über die Druckkraft wird die Flanschpaarung folglich weiter zusammengedrückt. Dieses Zug- und Druckkraftverhältnisse kehrt sich um, wenn die Andrückkraft F_{A} aus der entgegengesetzten radialen Richtung auf die Andrückrolle 14 einwirkt. In diesem Fall dreht auch das Flanschmoment M_{F} seine Drehrichtung um und die Flanschpaarung 16 wird entgegengesetzt belastet. Zu bedenken ist, dass dieser Beschreibung der Kräfteverhältnisse die zweidimensionale Darstellung der Figur 2 zugrunde liegt. In einem realen Applikationsprozess kann sich eine beliebige radiale Richtung der Andrückkraft F_{A} bezüglich der Andrückrolle 14 einstellen, infolge dessen sich das Flanschmoment M_{F} bezüglich seiner Wirkachse ändert.

Ausgehend hiervon ergeben sich nun verschiedene Möglichkeiten, über die Sensoreinheit 30 die in der Flanschpaarung 16 wirksamen Reaktionskräfte F_{Fn} zu erfassen, um hierüber eine Aussage über die Höhe und den Winkel der Andrückkraft F_{A} des Dichtungsprofils 30 auf den Klebeflansch des Türzusammenbaus 40 treffen zu können. Um hierbei Zugkräfte von Druckkräften unterscheiden zu können, ist es zweckmäßig wenn die Sensoreinheit 30 in ihrer unbelasteten Grundstellung mit einer definierten Vorspannung in der Flanschpaarung 16 gehalten ist. Hierdurch ist es möglich, eine infolge einer Zugspannung erfolgte Entlastung des Flanschbereichs als reduzierte Vorspannung zu erkennen und eine infolge einer Druckspannung erfolgte Belastung des Flanschbereichs als erhöhte Vorspannung zu erkennen. Erfasst wird also letztlich eine Kräftedifferenz bzw. eine positive oder negative Abweichung von der Vorspannung der Flanschpaarung 16.

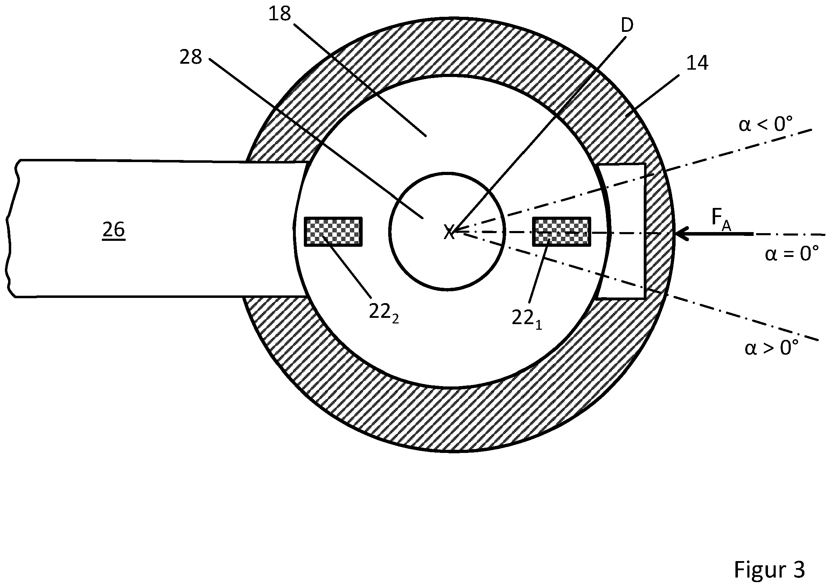

Eine verhältnismäßig einfache Möglichkeit der Erfassung der Reaktionskräfte F_{Fn} in der Flanschpaarung 16 lehnt sich an der Darstellung der Figur 2 an, wobei die Sensoreinheit 20 zwei einzelne Drucksensoren 22₁ und 22₂ umfasst, die in der Flanschpaarung 16 auf einer parallelen Linie zu der hauptsächlich vorherrschenden Richtung der Andrückkraft F_{A} und auf entgegengesetzten Seiten bezüglich der Drehachse D liegen. Hierzu zeigt die Figur 3 einen Schnitt entlang der Linie A-A in der Figur 2. Die Ansicht der Figur 3 zeigt den Anbindungsbereich 16 mit der Sensoreinheit 20, vorliegend ausgeführt mit zwei Drucksensoren 22₁ und 22₂. Weiterhin ist die Andrückrolle 14 zu erkennen und eine Andrückkraft F_{A}, die in der gleichen Andrückrichtung R_{A} eingezeichnet ist, wie in der Figur 2. Dieser Andrückrichtung R_{A} kann der Winkel α von 0° zugeordnet werden. Wie bereits zuvor erläutert, erzeugt ein Andrückkraft F_{A}, die unter dem Winkel α von 0° wirkt, in der Flanschpaarung entgegengesetzt gerichtete und betragsmäßig gleiche Reaktionskräfte. Vorliegend würde also der Drucksensor 22₁ die Zugkraft F_{F1} und Drucksensor 22₂ die Druckkraft F_{F2} erfassen. Weicht die Andrückrichtung R_{A} der Andrückkraft F_{A} nun von dem Winkel α von 0° ab, verringern sich die über die Drucksensoren 22₁, 22₂ erfassten Reaktionskräfte betragsmäßig in gleichem Maße, bis die Drucksensoren 22₁, 22₂ schließlich keine Reaktionskraft mehr erfassen können, wenn die Andrückkraft F_{A} unter einem Winkelbetrag von 90° auf die Andrückrolle 14 wirkt. Wirkt die Andrücckraft F_{A} unter einem Winkelbetrag größer als 90° auf die Andrückrolle 14, können die Drucksensoren 22₁, 22₂ wieder Reaktionskräfte erfassen, bis sich unter einem Winkel α von 180° die vollen Beträge der Reaktionskräfte über die Drucksensoren 22₁, 22₂ erfassen lassen. Obwohl sich mit dieser vereinfachten Variante der Applikationseinheit 10 nur die Beträge der Reaktionskräfte und des Winkels α der Andrückkraft F_{A}, also nicht auch das Vorzeichen des Winkels α, erfassen lassen, kann sie vorteilhafter Weise bei Anwendungen zum Einsatz kommen, bei denen lediglich der Erfassung der Reaktionskräfte in der Flanschpaarung 16 von Interesse ist, um darüber eine Aussage über die Höhe der resultierenden Andrückkraft F_{A} machen zu können.

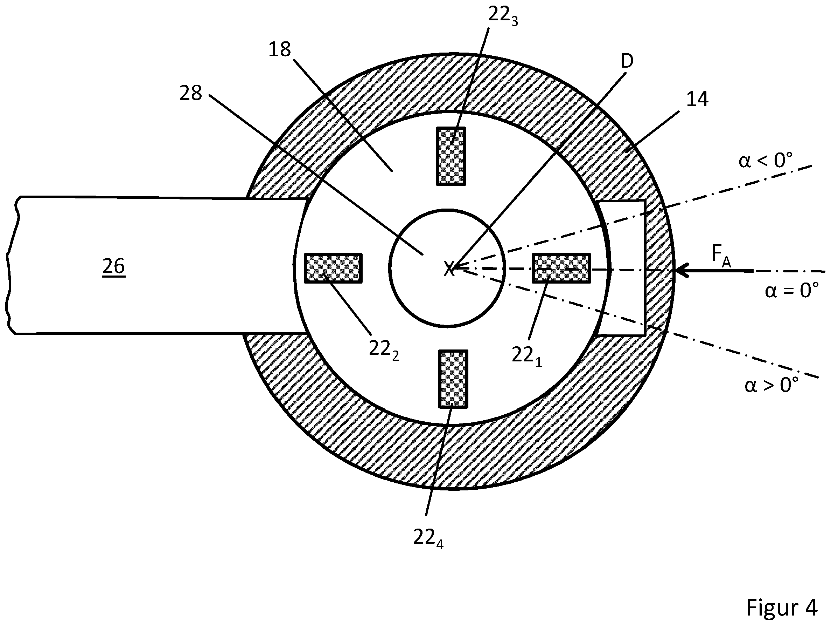

Bei der in Figur 4 gezeigten Ausgestaltung der Applikationsvorrichtung 10 ist es zudem auch möglich, das Vorzeichen des Winkels α der Andrückkraft F_{A} zu erfassen. Die Applikationsvorrichtung 10 umfasst in ihrer Flanschpaarung 16 eine Sensoreinheit 20 mit vier Drucksensoren 22₁ bis 22₄. Die vier Drucksensoren 22₁ bis 22₄ sind gleichmäßig beabstandet umfänglich um die Drehachse D angeordnet. Durch diese Anordnung bleibt zunächst die im Zusammenhang mit der Figur 3 und der Sensoreinheit 20 mit zwei Drucksensoren 22₁, 22₂ beschriebenen Messmöglichkeiten erhalten. Zusätzlich hierzu erfolgt eine Erweiterung durch die weiteren zwei Drucksensoren 22₃ und 22₄, die um 90° gedreht zu den ersten beiden Drucksensoren 22₁, 22₂ angeordnet sind. Wie bereits zu Figur 3 erläutert, erzeugt ein Andrückkraft F_{A}, die unter dem Winkel α von 0° wirkt, in der Flanschpassung entgegengesetzt gerichtete und betragsmäßig gleiche Reaktionskräfte. Vorliegend würde also der Drucksensor 22₁ die Zugkraft F_{F1} und Drucksensor 22₂ die Druckkraft F_{F2} erfassen. Der dritte und der vierte Drucksensoren 22₃ und 22₄ erfassen bei einer Andrückkraft F_{A}, die unter dem Winkel α von 0° wirkt, keine Reaktionskräfte. Dies ändert sich aber, sobald der Winkel α der Andrückkraft F_{A} von 0° abweicht. In diesem Fall erfassen der dritte und der vierte Drucksensor 22₃, 22₄ in ihrem Betrag gleiche aber in ihrem Vorzeichen entgegengesetzte Reaktionskräfte. Bereits beschrieben wurde, dass sich die Reaktionskräfte als Erhöhung oder als Reduzierung der Vorspannung ergeben, mit der die Sensoreinheit 20, und damit deren Drucksensoren 22, in der Flanschpaarung 16 gehalten sind.

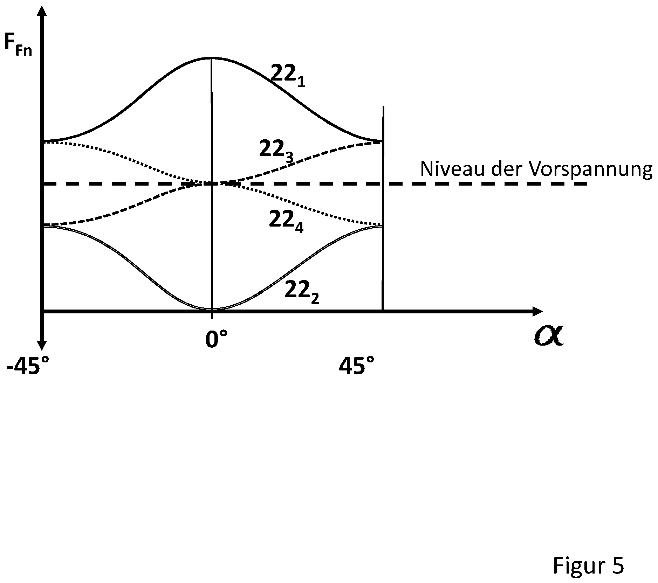

Die Figur 5 zeigt exemplarisch den Verlauf der von vier Drucksensoren 22₁ bis 22₄ erfassten Reaktionskräften, aufgetragen über einen Winkel α, unter dem eine Andrückkraft F_{A} von der Andrückrolle 14 auf den Klebeflansch des Karosseriebauteils 40 aufgebracht wird. Der Winkel α ist in der Darstellung auf +/- 45° beschränkt, da dieser Bereich im realen Betrieb nicht verlassen wird. Bei einem Winkel α von 0° erfassen lediglich die Drucksensoren 22₁ und 22₂ Reaktionskräfte und zwar einmal als positive Differenz zur Vorspannung und einmal als negative Differenz zur Vorspannung der Sensoreinheit 20. Sobald die Andrückkraft F_{A} unter einem Winkel α abweichend von 0° auf die Andrückrolle 14 einwirkt, erfassen der dritte und der vierte Drucksensor 22₃ und 22₄ jeweils betragsmäßig gleiche aber entgegengesetzt gerichtete Reaktionskräfte, das heißt im Bereich der Drucksensoren 22₃ und 22₄ erfolgt ebenfalls eine Erhöhung und eine Reduzierung der Vorspannung, die entsprechend erfasst wird. Eine Aussage darüber, ob nun der Winkel α ausgehend von 0° sich in positiver oder in negativer Drehrichtung verändert hat, lässt sich eindeutig aus dem Vorzeichen der erfassten Reaktionskräfte des dritten und des vierten Drucksensors 22₃ und 22₄.

Zur Erzeugung der Vorspannung in der Flanschpaarung kann zweckmäßigerweise eine Verschraubung vorgesehen sein, die beispielsweise mehrere umfänglich angeordnete Schraube-Mutter-Paarungen. Auf eine separate Darstellung in den Figuren wurde verzichtet. Bei der Ausgestaltung der Applikationseinheit 10, die vier Drucksensoren 22₃ und 22₄ umfasst, kann beispielsweise vorgesehen sein, dass abwechselnd in Umfangsrichtung mit dem vier Drucksensoren 22₃ und 22₄ vier Schraube-Mutter-Paarungen vorgesehen sind. Die Verwendung von einer derartigen Verschraubung hat den Vorteil, dass diese mit einer definierten und konstruktiv auszulegenden Schraubenvorspannung zur Anwendung kommen, so dass es mit geringem Aufwand möglich ist entsprechende Drucksensoren einzusetzen, deren Messbereich gut auf die einzustellende Vorspannung abgestimmt ist. Selbstverständlich sich auch noch andere Befestigungsarten möglich, um die Vorspannung in dem Anbindungsbereich 16 herzustellen. Beispielsweise könnte auch ein Bajonettverschluss vorgesehen sein. Auch könnte eine Zentralmutter vorgesehen sein, die auf einem Gewindeabschnitt des Antriebswellengehäuses von unten den Grundkörper gegen den Flansch des Antriebswellen Gehäuses beaufschlagt, siehe Figur 2.

### Bezugszeichenliste

- 10: Applikationseinheit
- 12: Anrollkopf
- 14: Andrückrolle
- 15: Fördereinrichtung
- 16: Anbindungsbereich
- 18: Antriebswellengehäuse
- 20: Sensoreinheit
- 22: Drucksensor
- 24: Verschraubung
- 26: Grundkörper
- 28: Antriebswelle
- 30: Dichtungsprofil
- 32: Antriebsmotor
- 40: Karosseriebauteil
- R_{A}: Andrückrichtung
- F_{A}: Andrückkraft
- α: Winkel zwischen Andrückrichtung und Normalenrichtung
- D: Drehachse

## Patentansprüche

1. Applikationseinheit (10) zum Anbringen eines Dichtungsprofils (30) auf ein dem Verschließen einer Karosserieöffnung dienenden Karosseriebauteil (40), umfassend
einen Anrollkopf (12)
und eine an dem Anrollkopf (12) gehaltene und drehend um eine Drehachse D antreibbare Andrückrolle (14), um über die Andrückrolle (14) das Dichtungsprofil (30) mit einer Andrückkraft F_{A} in einer Andrückrichtung R_{A} gegen das Karosseriebauteil (40) zu beaufschlagen,
**dadurch gekennzeichnet, dass** in einem Anbindungsbereich (16) der Andrückrolle (14) an den Anrollkopf (12) eine Sensoreinheit (20) umfänglich und konzentrisch um die Drehachse D der Andrückrolle (14) angeordnet ist, um eine die Andrückkraft F_{A} repräsentierende Beanspruchung in dem Anbindungsbereich (16) zu detektieren.

2. Applikationseinheit (10) nach Anspruch 1, **dadurch gekennzeichnet, dass** die Sensoreinheit (20) eine Mehrzahl an Drucksensoren (22) umfasst.

3. Applikationseinheit (10) nach Anspruch 1 oder 2, **dadurch gekennzeichnet, dass** die Andrückrolle (14) in einem Antriebswellengehäuse (18) gehalten ist und das Antriebswellengehäuse (18) in dem Anbindungsbereich (16) an dem Anrollkopf gehalten ist.

4. Applikationseinheit (10) nach Anspruch 3, **dadurch gekennzeichnet, dass** der Anbindungsbereich (16) als Flanschpaarung zwischen dem Antriebswellengehäuse (18) und dem Anrollkopf (12) ausgeführt ist.

5. Applikationseinheit (10) nach Anspruch 4, **dadurch gekennzeichnet, dass** die Sensoreinheit (20) innerhalb der Flanschpaarung (16) angeordnet ist.

6. Applikationseinheit (10) nach Anspruch 4 oder 5, **dadurch gekennzeichnet, dass** die Flanschpaarung (16) als Schraubflansch ausgeführt ist.

7. Applikationseinheit (10) nach Anspruch 6, **dadurch gekennzeichnet, dass** der Schraubflansch (16) eine Mehrzahl an umfänglich um die Drehachse D angeordnete Verschraubungen (24) umfasst.

8. Applikationseinheit (10) nach Anspruch 7, **dadurch gekennzeichnet, dass** jeder Verschraubung (24) des Schraubflansches (16) ein Drucksensor (22) der Sensoreinheit (20) zugeordnet ist.

## Claims

1. Application unit (10) for attaching a sealing profile (30) to a body component (40) serving to close a body opening, comprising
a rolling head (12)
and a pressure roller (14) which is held on the rolling head (12) and can be driven in rotation about an axis of rotation D, in order to use the pressure roller (14) to press the sealing profile (30) with a pressure force F_{A} in a pressure direction R_{A} against the body component (40),
**characterized in that**, in an attachment region (16) of the pressure roller (14) on the rolling head (12), a sensor unit (20) is arranged circumferentially and concentrically about the axis of rotation D of the pressure roller (14) in order to detect a stress, in the attachment region (16), representing the pressure force F_{A}.

2. Application unit (10) according to Claim 1, **characterized in that** the sensor unit (20) comprises a plurality of pressure sensors (22).

3. Application unit (10) according to Claim 1 or 2, **characterized in that** the pressure roller (14) is held in a drive shaft housing (18), and the drive shaft housing (18) is held in the attachment region (16) on the rolling head.

4. Application unit (10) according to Claim 3, **characterized in that** the attachment region (16) is designed as a flange pairing between the drive shaft housing (18) and the rolling head (12).

5. Application unit (10) according to Claim 4, **characterized in that** the sensor unit (20) is arranged within the flange pairing (16).

6. Application unit (10) according to Claim 4 or 5, **characterized in that** the flange pairing (16) is designed as a screw flange.

7. Application unit (10) according to Claim 6, **characterized in that** the screw flange (16) comprises a plurality of screw connections (24) arranged circumferentially about the axis of rotation D.

8. Application unit (10) according to Claim 7, **characterized in that** each screw connection (24) of the screw flange (16) is assigned a pressure sensor (22) of the sensor unit (20).

## Revendications

1. Unité d'application (10) destinée à placer un profilé d'étanchéité (30) sur un élément de carrosserie (40) servant à fermer une ouverture de carrosserie, ladite unité d'application comprenant
une tête de roulage (12)
et un rouleau presseur (14) qui est maintenu sur la tête de roulage (12) et qui peut être entraîné en rotation sur un axe de rotation D pour exercer une force de pression F_{A} sur le profilé d'étanchéité (30) par le biais du rouleau presseur (14) dans une direction de pression R_{A} dirigée vers le composant de carrosserie (40),
**caractérisée en ce que**, dans une zone de placement (16) du rouleau presseur (14) sur la tête de roulage (12), une unité de détection (20) est disposée circonférentiellement et concentriquement autour de l'axe de rotation D du rouleau presseur (14) pour détecter une contrainte, représentative de la force de pression F_{A}, dans la zone de placement (16).

2. Unité d'application (10) selon la revendication 1, **caractérisée en ce que** l'unité de détection (20) comprend une pluralité de capteurs de pression (22).

3. Unité d'application (10) selon la revendication 1 ou 2, **caractérisée en ce que** le rouleau presseur (14) est maintenu dans un carter d'arbre d'entraînement (18) et le carter d'arbre d'entraînement (18) est maintenu dans la zone de placement (16) sur la tête de roulage.

4. Unité d'application (10) selon la revendication 3, **caractérisée en ce que** la zone de placement (16) est réalisée sous la forme d'une paire de brides entre le carter d'arbre d'entraînement (18) et la tête de roulage (12).

5. Unité d'application (10) selon la revendication 4, **caractérisée en ce que** l'unité de détection (20) est disposée à l'intérieur de la paire de brides (16).

6. Unité d'application (10) selon la revendication 4 ou 5, **caractérisée en ce que** la paire de brides (16) est réalisée sous forme de bride à vis.

7. Unité d'application (10) selon la revendication 6, **caractérisée en ce que** la bride à vis (16) comprend une pluralité de moyens de vissage (24) disposés circonférentiellement autour de l'axe de rotation D.

8. Unité d'application (10) selon la revendication 7, **caractérisée en ce qu'**à chaque moyen de vissage (24) de la bride à vis (16) est associé un capteur de pression (22) de l'unité de détection (20).
